(19) Europäisches Patentamt / European Patent Office / Office européen des brevets

(11) **EP 2 639 274 A1**

(12) **EUROPEAN PATENT APPLICATION**
published in accordance with Art. 153(4) EPC

(43) Date of publication:
**18.09.2013 Bulletin 2013/38**

(51) Int Cl.:
**C09D 201/00** (2006.01)  **C09D 1/00** (2006.01)
**C09D 5/02** (2006.01)  **C09D 7/12** (2006.01)
**C09K 3/18** (2006.01)  **F28F 13/18** (2006.01)

(21) Application number: **11834336.7**

(22) Date of filing: **18.10.2011**

(86) International application number:
**PCT/JP2011/073889**

(87) International publication number:
**WO 2012/053497 (26.04.2012 Gazette 2012/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2010 JP 2010234993**

(71) Applicant: **Nihon Parkerizing Co., Ltd.
Tokyo 103-0027 (JP)**

(72) Inventor: **KATAOKA, Toshihisa
Tokyo 103-0027 (JP)**

(74) Representative: **Albrecht, Thomas
Kraus & Weisert
Patent- und Rechtsanwälte
Thomas-Wimmer-Ring 15
80539 München (DE)**

(54) **HYDROPHILIC FILM FOR METAL MATERIALS, HYDROPHILIZATION TREATMENT AGENT, AND HYDROPHILIZATION TREATMENT METHOD**

(57)     A hydrophilic film is formed on the surface of a metal material, inhibits the growth of condensation water, and provides mold resistance, and a hydrophilization treatment agent is used for forming the hydrophilic film. The hydrophilization treatment agent has one or more compounds selected from poorly water-soluble cerium compounds (A); and a hydrophilic film prepared from the hydrophilization treatment agent. Preferably, the poorly water-soluble cerium compounds (A) are one or more compounds selected from cerium (III) carbonate, cerium (III) fluoride, cerium (IV) fluoride, and cerium (IV) oxide. By forming the hydrophilic film on the surface of a metal material, the growth of condensation water can be inhibited, and the mold resistance can be provided.

FIG. 1

10

Printed by Jouve, 75001 PARIS (FR)

**Description**

**Field of the Invention**

The present invention relates to a hydrophilic film formed on a surface of a metal material; a hydrophilization treatment agent for forming the hydrophilic film; and a hydrophilization treatment method.

**Background Art**

Air conditioners having functions of cooling, heating, dehumidifying and the like arc equipped with a heat exchanger fin in its heat exchanging unit. The fin material used for forming this heat exchanger fin is generally desired to be light-weight and have excellent proccssability as well as excellent thermal conductivity; therefore, the fin material is composed of a metal material such as aluminum, aluminum alloy, copper or copper alloy.

Conventionally, many of the heat exchangers that are formed by a variety of assembly methods using metal materials having excellent thermal conductivity as members are designed in such a manner that the heat- releasing section and the cooling section have large surface area as much as possible in order to improve the heat radiation effect or cooling effect. Accordingly, the fins, which are the primary heat- releasing and cooling sections, are arranged with extremely narrow spaces between each other. Thus, when an air conditioner is put into operation (in a cooling mode) and the moisture in the air becomes condensed to cause dew condensation, the more hydrophobic the fin surface is, the more easily the condensation water collects into droplets to cause clogging between the fins due to the growth of water droplets. When this clogging occurs, the ventilation resistance is increased, so that the heat exchange efficiency is reduced and the functions are thus impaired. In addition, there also arises a problem that the clogging water droplets are scattered.

Furthermore, condensation water generated in the heat- releasing and cooling sections of a heat exchanger is not promptly evacuated from the surface of the heat exchanger, but rather gradually dried and released into the air once the air conditioner is turned off. Therefore, a highly humid condition occurs in the heat exchanging unit and such a condition makes bacteria and molds more likely to grow in the heat exchanging unit. The growth of bacteria and molds causes problems that an unpleasant odor is smelled when the air conditioner is operated and that the metal material constituting the heat exchange is corroded. In addition, there are reports that the growth of molds, especially hygrophilous molds, occurs particularly in heat exchanging units and these molds are associated with unpleasant odors (Non- patent Documents 1, 2 and 3) .

In view of the above, in order to solve such problems of clogging caused by condensation water and bacterial and mold growth, there have been proposed and practiced methods of providing a hydrophilic film having hydrophilicity and anti-bacterial and anti-mold properties on the surface of a heat exchanger member.

As a method of imparting the surface of a heat exchanger member with hydrophilicity and anti-bacterial and anti-mold properties, there have been proposed, for example, a method in which a treatment agent containing a combination of a polyvinyl alcohol, a specific water-soluble polymer and a cross-linking agent is employed (Patent Document 1); methods in which a treatment agent containing a combination of a specific water-soluble polymer and an anti-bacterial and anti-mold component, zinc pyrithione, is employed (Patent Documents 2 and 3); a method in which a treatment agent containing chitosan having anti-bacterial properties is employed (Patent Document 4); and a method in which a treatment agent containing a combination of a poly(meth)acrylic acid and a specific water-soluble metal compound such as Ce is employed (Patent Document 5).

**Prior Art References**

**Non-Patent Documents**

[Non-Patent Document 1] Antibacterial and Antifungal Agents (The Society for Antibacterial and Antifungal Agent) Vol. 21, No. 7, P.385-389, 1993
[Non-Patent Document 2] Antibacterial and Antifungal Agents (The Society for Antibacterial and Antifungal Agent) Vol. 22, No. 5, P.277-282, 1994
[Non-Patent Document 3] Antibacterial and Antifungal Agents (The Society for Antibacterial and Antifungal Agent) Vol. 36, No. 6, P.359-363, 2008

**Patent Documents**

Patent Document 1: Japanese Laid- Open Patent Application No. H5 (1993)- 302042
Patent Document 2: Japanese Laid-Open Patent Application No.2000-171191
Patent Document 3: Japanese Laid-Open Patent Application No.2006-78134
Patent Document 4: Japanese Laid-Open Patent Application No.2002-105241
Patent Document 1: Japanese Laid- Open Patent Application No. H5 (1993)- 222334

**Summary of the Invention**

**The Problems Solved by the Invention**

However, these prior arts proposed in the above- described Patent Documents 1 to 3 are technologies in which anti- mold effect is attained by separately adding a substance generally referred to as "antimicrobial agent" and the amount of such antimicrobial component to be added is limited so that the desired hydrophilicity is not impaired. Further, in the prior art proposed in the above- described Patent Document 4, although a film having a small contact angle can be obtained, there is a problem in that not only the growth of condensation water cannot be inhibited, but also mold resistance cannot be attained. In the prior art proposed in the above- described Patent Document 5, in addition to a water- soluble metal compound, an antimicrobial component is separately added in order to attain mold resistance. In this respect, there is a concern for the same problems as in the above- described prior arts where an antimicrobial component is separately added.

In recent years, the spaces between the fins have been progressively reduced to conform with miniaturization of heat exchangers and it is easily imaginable that the trend will further develop in the direction where excellent hydrophilicity and excellent mold resistance are demanded.

The present invention was made to solve the problems of the above-described prior arts and objects of the present invention arc to provide a hydrophilic film which inhibits the growth of condensation water and imparts mold resistance to the surface of a metal material; to provide a hydrophilization treatment agent for forming such a hydrophilic film; and to provide a hydrophilization treatment method.

**Problem Resolution Means**

Conventionally, the water contact angle is measured as an evaluation method of hydrophilicity; however, the present inventor discovered that this evaluation method is not necessarily appropriate. That is, the present inventor discovered that clogging caused by condensation water cannot always be prevented even in a film having a small contact angle and that measurement of the contact angle alone results in problems when the film is put into practice.

The present inventor also discovered that a small water contact angle alone is not sufficient in terms of the hydrophilicity required for a metal material to be used in a heat exchanger and that it is important for the metal material to have a property of allowing condensation water generated in an actual service environment to uniformly and quickly wet and spread over the metal material, that is, condensation wettability, thereby establishing the evaluation method thereof. By using the evaluation method of the condensation wettability established by the present inventor, it is now possible to appropriately evaluate a film capable of inhibiting the growth of condensation water. Based on the establishment of such evaluation method, the present inventor intensively studied a hydrophilic film which inhibits the growth of condensation water and provides mold resistance, thereby completing the present invention.

To solve the above-discussed problems, the hydrophilization treatment agent according to the present invention include: water; and one or more compounds selected from poorly water-soluble cerium compounds (A) dispersed in the water.

A hydrophilic film which can be obtained by using the hydrophilization treatment agent of the present invention is capable of imparting a metal material with excellent condensation wettability and excellent mold resistance. Consequently, not only the problems caused by clogging due to condensation water, such as a reduction in the heat exchange efficiency and scattering of water droplets, can be resolved, but also those problems that are caused by mold growth, such as generation of an unpleasant odor and corrosion of the metal material, can be resolved as well.

Preferably, in the hydrophilization treatment agent according to the present invention, the poorly water- soluble cerium compound (A) has a particle size of 0.01 to 2.0 μm and is dispersed in the water.

Preferably, in the hydrophilization treatment agent according to the present invention, the poorly water- soluble cerium compound (A) is one or more compounds selected from cerium (III) carbonate, cerium (III) fluoride, cerium (IV) fluoride and cerium (IV) oxide.

Preferably, the hydrophilization treatment agent according to the present invention further includes one or more components selected from organic components (B) in the water.

To solve the above-discussed problems, the hydrophilic film according to the present invention is formed on a surface of a metal material, and includes one or more compounds selected from poorly water-soluble cerium compounds (A).

Preferably, in the hydrophilic film according to the present invention, the content of the poorly water- soluble cerium compound (A) is 5 to 100% by mass in  terms of solid content ratio.

Preferably, in the hydrophilic film according to the present invention, the poorly water- soluble cerium compound (A) is one or more compounds selected from cerium (III) carbonate, cerium (III) fluoride, cerium (IV) fluoride and cerium (IV) oxide.

Preferably, the hydrophilic film according to the present invention further includes one or more components selected from organic components (B) .

The hydrophilic film according to the present invention can be obtained by: (1) using a hydrophilization treatment agent which contains one or more selected from poorly water-soluble cerium compounds (A); (2) treating the above-described surface of the above-described metal material with a hydrophilization treatment agent which contains one or more selected from the poorly water-soluble cerium compounds (A) and subsequently drying the resultant; or (3) a method which includes the steps of: treating a part or the entirety of a surface of a metal material with a hydrophilization treatment agent which contains water and one or more selected from poorly water-soluble cerium compounds (A) dispersed in the above-described water; and then drying the resultant to form a hydrophilic film.

To solve the above-discussed problems, the hydrophilization treatment method according to the present invention includes: a step of treating a part or the entirety of a surface of a metal material with the hydrophilization treatment agent that includes water and one or more compounds selected from poorly water-soluble cerium compounds (A) dispersed in the water; and a step of drying the resultant to form the hydrophilic film, subsequently. The hydrophilic film includes one or more compounds selected from poorly water-soluble cerium compounds (A).

To solve the above-discussed problems, the metal material according to the present invention has the hydrophilic film according to the above present invention on a surface of the metal material.

Preferably, the metal material according to the present invention is any one of an aluminum material, an aluminum alloy material, a copper material and a copper alloy material. Further, the metal material according to the present invention is a member of a heat exchanger.

**Efficacy of the Invention**

A hydrophilic film obtained by using the hydrophilization treatment agent according to the present invention has excellent condensation wettability and excellent mold resistance. By applying this hydrophilic film to, for example, an aluminum, aluminum alloy, copper or copper alloy material which constitutes a heat exchanger or the like, the metal material can be imparted with excellent condensation wettability which solves the problems caused by clogging due to condensation water such as a reduction in the heat exchange efficiency and scattering of water droplets. In addition, generation of unpleasant odor which is caused by mold growths, corrosion of the metal material and the like, can also be inhibited. Furthermore, even when the metal material is used for an extended period of time, excellent condensation wettability can be retained and inhibition of unpleasant odor and corrosion of the metal material, which arc caused by mold growth, can be maintained.

**Brief Descriptions of the Drawings**

[Fig. 1] Fig. 1 is a cross-sectional view which schematically shows one example of metal material on which the hydrophilic film according to the present invention is formed.

[Fig. 2] Fig. 2 is a graph which shows the relationship between the results of measuring the "contact angle", which is a common method of evaluating the hydrophilicity, and the results of measuring the "condensation wettability" which was performed as an evaluation method in Examples.

**Embodiments of the Invention**

The hydrophilic film according to the present invention, the hydrophilization treatment agent according to the present invention and the hydrophilization treatment method according to the present invention will now be described in more detail by way of embodiments thereof.

[Hydrophilic Film]

The hydrophilic film according to the present invention is a hydrophilic film formed on a surface of a metal material and is characterized by containing one or more selected from poorly water-soluble cerium compounds (A). This hydrophilic film imparts a metal material with excellent condensation wettability and mold resistance. Here, the term "condensation wettability" refers to a criterion of the method of evaluating the hydrophilicity of a metal material to be used in a heat exchanger, which method was established by the present inventor. Specific evaluation procedures are as described below in Examples.

As a metal material to be used in a heat exchanger, a metal material having only a small water contact angle is not sufficient. By using a metal material having excellent condensation wettability, the growth of condensation water which occurs in the actual service environment can be inhibited, so that condensation water is allowed to uniformly and promptly wet and spread over the metal material.

The constitution of the hydrophilic film will now be described.

(Poorly Water-soluble Cerium Compound)

The poorly water-soluble cerium compound (A) contained in the hydrophilic film according to the present invention is not particularly restricted and any cerium compound which is classified as insoluble or hardly soluble to water can be suitably employed.

Examples of such cerium compound include cerium (III) carbonate, cerium (III) fluoride, cerium (IV) fluoride, cerium (IV) oxide, cerium (III) oxalate, cerium (III) phosphate and cerium (III) sulfide. Thereamong, from the standpoint of attaining excellent condensation wettability and mold resistance, which is an object of the present invention, the poorly water-soluble cerium compound (A) is preferably selected from cerium (111) carbonate, cerium (III) fluoride, cerium (IV) fluoride and cerium (IV) oxide. In addition, the hydrophilic film according to the present invention may also contain two or more of these poorly water-soluble cerium compounds. To add further, from the standpoint of achieving both condensation wettability and mold resistance at high levels, which is an object of the present invention, it is more preferred that the hydrophilic film according to the present invention contain cerium (IV) oxide.

Some of poorly water-soluble cerium compounds are converted into cerium (IV) oxide when subjected to an external energy such as heat. From the standpoint of attaining condensation wettability and mold resistance, which is an object of the present invention, the poorly water-soluble cerium compound contained in the hydrophilic film may be partially or entirely converted into the form of cerium (IV) oxide.

The content of the poorly water-soluble cerium compound (A) in the hydrophilic film is, in terms of solid content ratio, preferably 5 to 100% by mass with respect to the amount of the hydrophilic film. When the content is not less than 5% by mass, excellent condensation wettability and mold resistance can be attained, which is an object of the present invention.

Particularly, from the standpoint of condensation wettability, it is more preferred that the content of the poorly water- soluble cerium compound (A) be, in terms of solid content ratio, 30 to 100% by mass with respect to the amount of the hydrophilic film. The closer the content of the cerium compound (A) is to 100% by mass, the more prominently the effect of improving the condensation wettability is exhibited, so that a more desired hydrophilic film is obtained. It is noted here that a case where the content of the cerium compound (A) is "100% by mass" encompasses a case where the hydrophilic film docs not contain the later- described organic component (B) at all as well as a case where the hydrophilic film does not substantially contain the organic component (B) . Here, the phrase "does not substantially contain" means that the  content of the organic component (B) is such a trace amount that does not allow the organic component (B) to exhibit its unique actions, which is, for example, about 0.01 to 1.0% by mass.

The content (solid content ratio) of the poorly water-soluble cerium compound (A) in the hydrophilic film can be determined as a ratio of the poorly water-soluble cerium compound (A) in a hydrophilization treatment agent with respect to the total mass of the hydrophilization treatment agent excluding water and other volatile components.

The amount of the hydrophilic film according to the present invention to be formed on a surface of a metal material is not particularly restricted as long as condensation wettability and mold resistance, which are objects of the present invention, can be attained. The amount of the film can be selected as appropriate and it is preferably in the range of 0.1 to 2.0 $g/m^2$, more preferably 0.1 to 1.0 $g/m^2$. When the amount of the film is not less than 0.1 $g/m^2$, the metal material is sufficiently coated, so that superior condensation wettability is attained, which is an object of the present invention. Further, when the amount of the film is 2.0 $g/m^2$ or less, condensation wettability and mold resistance, which are objects of the present invention, can be attained, and the amount of the film is appropriate and thus economical.

(Organic Component)

By containing one or more selected from the above-described poorly water-soluble cerium compounds (A), the hydrophilic film according to the present invention can impart a metal material with excellent condensation wettability and mold resistance. Further, in order to improve the residual property of the poorly water-soluble cerium compound (A) against water (water resistance) and allow it to stably disperse in a hydrophilization treatment agent used to obtain the hydrophilic film according to the present invention, the hydrophilic film according to the present invention may also contain one or more selected from organic components (B).

The organic component (B) contained in the hydrophilic film is not particularly restricted as long as it does not adversely affect the condensation wettability and the mold resistance, which are objects of the present invention. As the organic component (B), for example, organic acids, surfactants and high-molecular-weight polymers can be suitably employed.

Specific examples of the organic acids include oxalic acid, malonic acid, maleic acid, fumaric acid, succinic acid, malic acid, citric acid, glutamic acid, aspartic acid, tartaric acid, phthalic acid, itaconic acid, mellitic acid, trimellitic acid, trimesic acid, pyromellitic acid, naphthalenetetracarboxylic acid, propanedicarboxylic acid, butanedicarboxylic acid, pentanedicarboxylic acid, hexanedicarboxylic acid, heptanedicarboxylic acid, butanetricarboxylic acid, butanetetracarboxylic acid (such as 1, 2, 3, 4- butanetetracarboxylic acid (BTC) ) , cyclohexanetetracarboxylic acid, hexanetricarboxylic acid, 1- hydroxyethylidene- 1, 1- diphosphonic acid, 2- phosphonobutane- 1, 2, 4- tricarboxylic acid (PBTC) , nitrilotris (methylenephosphonic acid) and ethylenediamine tetra (methylenephosphonic acid) , and the organic component (B) may also be a salt of these organic acids. Examples of a cationic counterion which forms the salt include metal ions such as alkali metal ions (e.g. sodium, potassium and lithium ions) and alkaline earth metal ions (e.g. magnesium, calcium and barium ions) ; and ammonium ion.

Specific examples of the surfactants include nonionic surfactants such as polyoxyethylene glycol, polyoxyethyl-ylene polyoxypropylene glycol, polyoxypropylene glycol, polyoxyethylene alkylphenyl ether, glycerin fatty acid partial ester, sorbitan fatty acid partial ester, pentaerythritol fatty acid partial ester, polyoxyethylene sorbitan fatty acid partial ester and polyoxyethylene alkyl ether.

Further, specific examples of the surfactants also include anionic surfactants such as polyoxyethylene alkyl ether carboxylates, N- acylsarcosinates, N- acylglutamates, dialkyl sulfosuccinatcs, alkane sulfonates, alpha- olefin sulfonates, linear alkylbenzene sulfonates, chain alkylbenzene sulfonates, naphthalenesulfonate- formaldehyde condensates, alkylnaphthalenesulfonates, N- methyl- N- acyltaurine, polyoxyethylene laurylether phosphate and polyoxyethylene alkyl ether phosphates. Examples of cationic counterions forming these salts include metal ions such as alkali metal ions (e.g. sodium, potassium and lithium ions) and alkaline earth metal ions (e.g. magnesium, calcium and barium ions) ; and ammonium ion.

Still further, specific examples of the surfactants also include cationic surfactants containing a quaternary amine such as alkyltrimethylammonium or alkyldimethylbenzylammonium; and amphoteric surfactants such as alkylbetaine, alkylamide propyl betaine and alkyldimethylamine oxide.

Specific examples of the above- described high- molecular- weight polymers include acrylic acid polymers; methacrylic acid polymers; acrylic acid- methacrylic acid copolymers; 2- acrylamide- 2- methylpropanesulfonic acid-acrylic acid copolymers; acrylic acid- containing copolymers; phosphonate group- containing polymers; polyvinyl alcohols; polyvinyl alcohol derivatives; cellulose derivatives; starch derivatives; gelatin derivatives; polymers and copolymers containing 4- styrenesulfonic acid and/or maleic anhydride; polystyrene- sulfonic acid; vinylsulfonic acid polymers; isoprenesulfonic acid polymers; polymers and copolymers ofN- vinylpyrrolidone, N- vinylcaprolactam, N- vinylcarbazole, 1- vinylimidazole, 2- vinylimidazole, 2- vinylpyridine, 4- vinylpyridine, acrylamide, methacrylamide, amino- functional acrylate and methacrylate; water- soluble nylons; polyethyleneimines; and polyimides. The functional groups of these high- molecular- weight polymers may also be a salt. Examples of a cationic counterion which forms the salt include metal ions such as alkali metal ions (e.g. sodium, potassium and lithium ions) and alkaline earth metal ions (e.g. magnesium, calcium and barium ions) ; and ammonium ion.

The content of the organic component (B) in the hydrophilic film is, in terms of solid content ratio (mass ratio) with respect to the content of the poorly water-soluble cerium compound (A), which is (B):(A), in the range of 0:100 to 95:5. From the standpoint of positively incorporating the organic component (B) to improve the residual property of the poorly water-soluble cerium compound (A) against water (water resistance) and allow the poorly water-soluble cerium compound (A) to stably disperse in a hydrophilization treatment agent, it is preferred that the ratio (B):(A) be in the range of 10:90 to 70:30. When the ratio of the above-described (B) is not less than 10, excellent water resistance as well as excellent dispersion of the poorly water-soluble cerium compound (A) are attained. Meanwhile, when the ratio of the above-described (B) is 70 or less, superior condensation wettability and mold resistance are attained.

As the organic component (B), one which is classified to be nonionic or anionic is generally preferred. Among the above-described organic acids and surfactants, nonionic and anionic surfactants are preferred. Among the above-described high-molecular-weight polymers, nonionic high-molecular-weight polymers such as polyvinyl alcohols, polyvinyl alcohol derivatives and polymers and copolymers of N-vinylpyrrolidone as well as anionic high-molecular-weight polymers such as acrylic acid polymers, acrylic acid copolymers and phosphonate group-containing polymers are preferred.

The hydrophilic film according to the present invention may also contain a component other than the above-described poorly water-soluble cerium compound (A) and organic component (B) in such a range which does not adversely affect the objects of the present invention; however, an embodiment in which the hydrophilic film contains only the poorly water-soluble cerium compound (A) and an embodiment in which the hydrophilic film contains only the poorly water-soluble cerium compound (A) and the organic component (B) are preferred.

In the hydrophilic film according to the present invention, the formation method thereof is not particularly restricted. For example, the hydrophilic film according to the present invention can be obtained by coating the hydrophilization treatment agent onto the surface of the above-described metal material and subsequently drying the resulting metal material.

[Hydrophilization Treatment Agent and Hydrophilization Treatment Method]

The hydrophilization treatment agent which is used to form a hydrophilic film and the hydrophilization treatment method will now be described.

The hydrophilization treatment agent according to the present invention, which is used to form a hydrophilic film having excellent condensation wettability and mold resistance, contains water and one or more selected from poorly water-soluble cerium compounds (A) dispersed in the water.

As the poorly water-soluble cerium compound (A), those which can be used in the above-described hydrophilic film according to the present invention may be employed. Thereamong, the poorly water-soluble cerium compound (A) is preferably one or more compounds selected from cerium (III) carbonate, cerium (III) fluoride, cerium (IV) fluoride and cerium (IV) oxide.

Further, the above-described water may also contain one or more components selected from organic component (B). As the organic component (B), those which can be used in the above-described hydrophilic film according to the present invention may be employed.

The hydrophilization treatment agent according to the present invention may also contain a component other than the above-described poorly water-soluble cerium compound (A) and organic component (B) in such a range which does not adversely affect the objects of the present invention; however, an embodiment in which the hydrophilic treatment agent contains only the poorly water-soluble cerium compound (A) and an embodiment in which the hydrophilic treatment agent contains only the poorly water-soluble cerium compound (A) and the organic component (B) are preferred.

To add further, it is preferred that the poorly water-soluble cerium compound (A) have a particle size in a prescribed range and be dispersed in the above-described water. Specifically, the particle size is preferably 0.01 $\mu$m or larger. With the particle size being 0.01 $\mu$m or larger, when the poorly water-soluble cerium compound (A) is coated onto a surface of a metal material, since the bonding strength between the particles is not very strong, agglutination of the particles can be inhibited even when dried, so that a uniform film can be obtained and excellent condensation wettability, which is an object of the present invention, can thus be attained.

Meanwhile, the particle size is preferably not larger than 2.0 $\mu$m, more preferably not larger than 1.0 $\mu$m. When the particle size is in the above-described range, a problem of the resulting hydrophilic film being detached from the metal material is not likely to occur, so that excellent condensation wettability, which is an object of the present invention, can be attained.

It is noted here that, in the present invention, the term "particle size" refers to a cumulative average particle size (median size) measured by a dynamic light scattering method, regardless of whether the particle is a primary particle or a secondary particle. One example of a measuring apparatus used for the dynamic light scattering method is UPA-EX150 manufactured by Nikkiso Co., Ltd. According to the measurement principle of the dynamic light scattering method, particles are irradiated with incident light (laser beam) and the resulting weak light scattered from the particles and the reference light are combined (heterodyne method). Then, by detecting the electrical signal using a photodetector and performing frequency analysis (FFT), the particle size distribution can be determined.

Next, a specific measurement method using UPA-EX150 is described. The specifications of UPA-EX150 are as follows: the light source is a semiconductor laser of 780 nm and 3 mW and the optical probe is an internal probe system. As for the measurement method, after diluting the hydrophilization treatment agent according to the present invention with deionized water such that the concentration of the poorly water-soluble cerium compound (A) becomes about 0.01%, the resultant is thoroughly dispersed with stirring and then loaded to the measuring section to measure the particle size. The measurement conditions are set to a measurement time of 180 seconds with no circulation and the particle conditions are set as follows: particle permeability = permeation, shape = non-spherical, and refractive index = 1.81 (default settings of the apparatus). As for the solvent conditions, the solvent is water and has a refractive index of 1.333.

A method of controlling the particle size of the poorly water-soluble cerium compound (A) is not particularly restricted and examples thereof include a scale-down method in which pulverization is performed by using, for example, a ball mill, a jet mill or a sand mill; an agglutination method or redox method in which cerium ion is subjected to oxidation-reduction to form particles; a physical vapor deposition method; a laser vaporization method; and a chemical vapor deposition method in which reactions are allow to take place in a gas phase.

A method of dispersing the poorly water-soluble cerium compound (A) and the organic component (B) in water is not particularly restricted. The dispersion may be carried out by using, for example, the above-described ball mill, jet mill or sand mill or by using a stirrer.

[Hydrophilization Treatment Method]

A method of forming a hydrophilized coating film on a metal material or a heat exchange containing a metal material as a member by using the above-described hydrophilization treatment agent will now be described. In the hydrophilization treatment method according to the present invention, a part or the entirety of a surface of a metal material is treated with the above-described hydrophilization treatment agent according to the present invention, which is then dried to form the above-described hydrophilic film according to the present invention.

It is preferred that the metal material be cleaned in advance with an alkaline or acidic aqueous cleaning agent; however, if not necessary, the cleaning process may be omitted. Further, as required, the metal material may also be, in a non-treated condition or after the cleaning treatment, subjected to an anti-corrosion treatment before being coated with the hydrophilization treatment agent according to the present invention. The anti-corrosion treatment is not particularly restricted and examples thereof include formation of a corrosion-resistant film (a conversion film or a corrosion-resistant primer layer) such as a known chromate, zinc phosphate, titanium-based, zirconium-based or organic film.

In this manner, a part or the entirety of the surface of a metal material, which is not treated or has been subjected to a cleaning treatment, an anti-corrosion treatment and the like as appropriate, is treated with the hydrophilization treatment agent such that a required amount of film can be formed. The method of this treatment is not particularly restricted and examples thereof include a method in which the hydrophilization treatment agent is coated by an appropriate coating means. Examples of the coating means include a roll-coating method, a spray-coating method and an immersion-coating method.

After being treated with the hydrophilization treatment agent, the resulting metal material is dried by heating or the like. This heat-drying is not particularly restricted as long as water contained in the resulting hydrophilic film is evaporated, and it is performed in the range of preferably 100 to 250°C, more preferably 100°C to 200°C, for a period of 5 seconds to 120 minutes. When the drying temperature is 100°C or higher, since the time required for sufficiently evaporating water from the film is short, the working efficiency is excellent. Meanwhile, when the drying temperature is 250°C or lower, since the binding of the poorly water-soluble cerium compound (A) does not become so strong, excellent water resistance is attained along with excellent condensation wettability.

The metal material is not particularly restricted; however, it is preferably an aluminum material, an aluminum alloy material, a copper material or a copper alloy material, which is used in an application where hydrophilicity is particularly required. The metal material is more preferably a heat exchanger constituted by using these materials as a member.

[Metal Material]

The metal material according to the present invention is one which has the above-described hydrophilic film formed on the surface. It is preferred that the metal material be one selected from an aluminum material, an aluminum alloy material, a copper material and a copper alloy material, or a member of a heat exchanger.

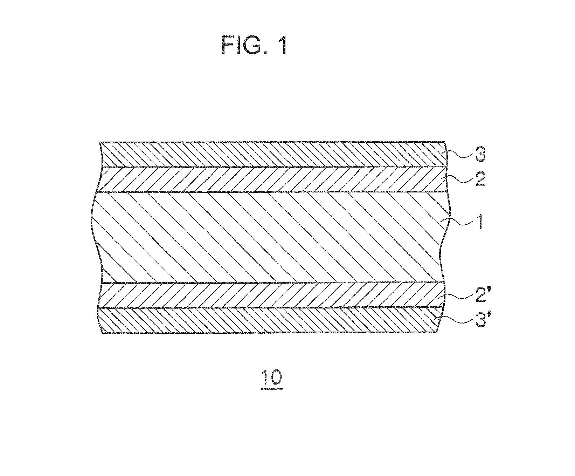

Fig. 1 is a cross-sectional view which schematically shows one example of the metal material according to the present invention. The constitution shown in Fig. 1. is just one example and the present invention is not restricted only thereto. In the example shown in Fig. 1, metal material 1 which is a material to be coated has corrosion-resistant films 2 and 2', which are formed as required, on the respective surfaces. On corrosion-resistant films 2 and 2', hydrophilic films 3 and 3' are formed, respectively. It is noted here that metal material 1 is not required to have corrosion-resistant films 2 and 2' and that hydrophilic film 3 may be formed only on the surface (single surface) where it is required.

In the above, the hydrophilic film, the hydrophilization treatment agent, the hydrophilization treatment method and the metal material, all of which pertain to the present invention, have now been described. The hydrophilic film according to the present invention has excellent hydrophilicity and mold resistance; therefore, for example, by applying it to an aluminum material, an aluminum alloy material, a copper material or a copper alloy material which constitutes a heat exchanger or the like, excellent condensation wettability, which solves the problems caused by clogging due to condensation water, such as a reduction in the heat-exchange efficiency and scattering of water droplets, can be provided. In addition, those problems such as generation of an unpleasant odor that is caused by mold growth and corrosion of the metal material, can also be inhibited. Furthermore, even when used for an extended period of time, the hydrophilic film according to the present invention can retain excellent condensation wettability and mold resistance.

Further, according to the metal material of the present invention on which a hydrophilic film is formed on a part or the entirety of the surface, since the hydrophilic film has excellent condensation wettability to solve the problems of a reduction in the heat- exchange efficiency and scattering of water droplets that are caused by clogging due to condensation water, the metal material of the present invention exhibits extremely high practical value when applied to a heat exchanger. In addition, the metal material of the present invention not only has high applicability to air conditioner parts, but also can be used in a wide range of other applications.

**Examples**

The present invention will now be explained concretely byway of examples and comparative examples thereof. The hydrophilization treatment methods for obtaining the hydrophilic films of Examples 1 to 48 and Comparative Examples 1 to 8 are described below. However, the scope of the present invention is not restricted to the following examples.

[Example 1]

To cerium (III) carbonate octahydrate (high-purity reagent: Kanto Chemical Co., Inc.), water was added such that the value of cerium (III) carbonate/total amount became 3.0 g/100 g, and the resultant was pulverized using a sand mill to obtain a water dispersion of cerium (III) carbonate having a particle size of 2.0 $\mu$m as hydrophilization treatment agent. Then, after coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m2 in terms of dry solid content.
Here, the particle size was measured by the following method and this is also the same for other Examples and Comparative Examples. Using UPA- EX150 as a measuring apparatus, after diluting the thus obtained hydrophilization treatment agent with deionized water such that the concentration of poorly water- soluble cerium compound (A) became about 0.01%, the resultant was thoroughly dispersed with stirring and then loaded to the measuring section to measure the particle size. Here, the measurement conditions were set to a measurement time of 180 seconds with no circulation and the particle conditions were set as follows: particle permeability = permeation, shape = non- spherical, and refractive index = 1.81 (default settings of the apparatus) . As for the solvent conditions, the solvent was water and had a refractive index of 1.333.

[Example 2]

To cerium (III) carbonate octahydrate (high-purity reagent: Kanto Chemical  Co., Inc.), water was added such that the value of cerium (III) carbonate/total amount became 3.0 g/100 g, and the resultant was pulverized using a sand mill to obtain a water dispersion of cerium (III) carbonate having a particle size of 1.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 3]

To cerium (III) carbonate octahydrate (high-purity reagent: Kanto Chemical Co., Inc.), water was added such that the value of cerium (III) carbonate/total amount became 3.0 g/100 g, and the resultant was pulverized using a sand mill to obtain a water dispersion of cerium (III) carbonate having a particle size of 0.5 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 4]

To cerium (III) carbonate octahydrate (high-purity reagent: Kanto Chemical Co., Inc.), water was added such that the value of cerium (III) carbonate/total amount became 3.0 g/100 g, and the resultant was pulverized using a sand mill to obtain a water dispersion of cerium (III) carbonate having a particle size of 0.1 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 5]

To cerium (III) fluoride (reagent: Wako Pure Chemical Industries Ltd.), water was added such that the value of cerium (III) fluoride/total amount became 3.0 g/100 g, and the resultant was pulverized using a sand mill to obtain a water dispersion of cerium (III) fluoride having a particle size of 2.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 6]

To cerium (III) fluoride, (reagent: Wako Pure Chemical Industries Ltd.), water was added such that the value of cerium (III) fluoride/total amount became 3.0 g/100 g, and the resultant was pulverized using a sand mill to obtain a water dispersion of cerium (III) fluoride having a particle size of 1.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 7]

To cerium (III) fluoride (reagent: Wako Pure Chemical Industries Ltd.), water was added such that the value of cerium (III) fluoride/total amount became 3.0 g/100 g, and the resultant was pulverized using a sand mill to obtain a water dispersion of cerium (III) fluoride having a particle size of 0.5 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 8]

To cerium (III) fluoride (reagent: Wako Pure Chemical Industries Ltd.), water was added such that the value of cerium (III) fluoride/total amount became 3.0 g/100 g, and the resultant was pulverized using a sand mill to obtain a water dispersion of cerium (III) fluoride having a particle size of 0.1 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 9]

To cerium (IV) fluoride (reagent: Wako Pure Chemical Industries Ltd.), water was added such that the value of cerium (IV) fluoride/total amount became 3.0 g/100 g, and the resultant was pulverized using a sand mill to obtain a water dispersion of cerium (IV) fluoride having a particle size of 2.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 10]

To cerium (IV) fluoride (reagent: Wako Pure Chemical Industries Ltd.), water was added such that the value of cerium (IV) fluoride/total amount became 3.0 g/100 g, and the resultant was pulverized using a sand mill to obtain a water dispersion of cerium (IV) fluoride, having a particle size of 1.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 11]

To cerium (IV) fluoride (reagent: Wako Pure Chemical Industries Ltd.), water was added such that the value of cerium (IV) fluoride/total amount became 3.0 g/100 g, and the resultant was pulverized using a sand mill to obtain a water dispersion of cerium (IV) fluoride having a particle size of 0.5 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 12]

To cerium (IV) fluoride (reagent: Wako Pure Chemical Industries Ltd.), water was added such that the value of cerium (IV) fluoride/total amount became 3.0 g/100 g, and the resultant was pulverized using a sand mill to obtain a water dispersion of cerium (IV) fluoride having a particle size of 0.1 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 13]

To cerium (IV) oxide (reagent: Wako Pure Chemical Industries Ltd.), water was added such that the value of cerium (IV) oxide/total amount became 3.0 g/100 g, and the resultant was pulverized using a sand mill to obtain a water dispersion of cerium (IV) oxide having a particle size of 2.5 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 14]

To cerium (IV) oxide (reagent: Wako Pure Chemical Industries Ltd.), water was added such that the value of cerium (IV) oxide/total amount became 3.0 g/100 g, and the resultant was pulverized using a sand mill to obtain a water dispersion of cerium (IV) oxide having a particle size of 2.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 15]

To cerium (IV) oxide (reagent: Wako Pure Chemical Industries Ltd.), water was added such that the value of cerium (IV) oxide/total amount became 3.0 g/100 g, and the resultant was pulverized using a sand mill to obtain a water dispersion of cerium (IV) oxide having a particle size of 1.0 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 16]

To cerium (IV) oxide (reagent: Wako Pure Chemical Industries Ltd.), water was added such that the value of cerium (IV) oxide/total amount became 3.0 g/100 g, and the resultant was pulverized using a sand mill to obtain a water dispersion of cerium (IV) oxide having a particle size of 0.5 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 17]

To cerium (IV) oxide (reagent: Wako Pure Chemical Industries Ltd.), water was added such that the value of cerium (IV) oxide/total amount became 3.0 g/100 g, and the resultant was pulverized using a sand mill to obtain a water dispersion of cerium (IV) oxide having a particle size of 0.1 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 18]

To a commercially available cerium (IV) oxide fine particle produced by a physical vapor synthesis (PVS) method, water was added such that the value of cerium (IV) oxide/total amount became 3.0 g/100 g, thereby obtaining a water dispersion of cerium (IV) oxide having a particle size of 0.02 $\mu$m as a hydrophilization treatment agent. After coating a metal material by immersing it in the thus obtained hydrophilization treatment agent, the resulting metal material was suspended in a blow dryer having an electric furnace adjusted to 160°C and heat-dried for 10 minutes to form a hydrophilic film on the test material in an amount of 0.5 g/m$^2$ in terms of dry solid content.

[Example 19]

To a commercially available cerium (IV) oxide fine particle produced by a physical vapor synthesis (PVS) method, water was added such that the value of cerium (IV) oxide/total amount became 3.0 g/100 g, and the resultant was ultrasonicated to obtain a water dispersion of cerium (IV) oxide having a particle size of 0.01 $\mu$m as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 20]

To 50 g of a water dispersion (cerium (IV) oxide/total amount = 3.0 g/100 g) prepared in the same manner as in Example 17, 50 g of a water dispersion (cerium (III) fluoride/total amount = 3.0 g/100 g) prepared in the same manner as in Example 8 was added to obtain a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 21]

To a commercially available cerium (IV) oxide fine particle produced by a physical vapor synthesis (PVS) method, water was added such that the value of cerium (IV) oxide/total amount became 1.0 g/100 g, thereby obtaining a water dispersion of cerium (IV) oxide having a particle size of 0.02 $\mu$m as a hydrophilization treatment agent. After coating a metal material by immersing it in the thus obtained hydrophilization treatment agent, the resulting metal material was suspended in a blow dryer having an electric furnace adjusted to 160°C and heat-dried for 10 minutes to form a hydrophilic film on the test material in an amount of 0.1 g/m$^2$ in terms of dry solid content.

[Example 22]

To a commercially available cerium (IV) oxide fine particle produced by a physical vapor synthesis (PVS) method, water was added such that the value of cerium (IV) oxide/total amount became 2.0 g/100 g, thereby obtaining a water dispersion of cerium (IV) oxide having a particle size of 0.02 $\mu$m as a hydroplilization treatment agent. After coating a metal material by immersing it in the thus obtained hydrophilization treatment agent, the resulting metal material was suspended in a blow dryer having an electric furnace adjusted to 160°C and heat-dried for 10 minutes to form a hydrophilic film on the test material in an amount of 0.3 g/m$^2$ in terms of dry solid content.

[Example 23]

To a commercially available cerium (IV) oxide fine particle produced by a physical vapor synthesis (PVS) method, water was added such that the value of cerium (IV) oxide/total amount became 5.0 g/100 g, thereby obtaining a water dispersion of cerium (IV) oxide having a particle size of 0.02 $\mu$m as a hydrophilization treatment agent. After coating a metal material by immersing it in the thus obtained hydrophilization treatment agent, the resulting metal material was suspended in a blow dryer having an electric furnace adjusted to 160°C and heat-dried for 10 minutes to form a hydrophilic film on the test material in an amount of 1.0 g/m$^2$ in terms of dry solid content.

[Example 24]

To a commercially available cerium (IV) oxide fine particle produced by a physical vapor synthesis (PVS) method, water was added such that the value of cerium (IV) oxide/total amount became 10.0 g/100 g, thereby obtaining a water dispersion of cerium (IV) oxide having a particle size of 0.02 $\mu$m as a hydrophilization treatment agent. After coating a metal material by immersing it in the thus obtained hydrophilization treatment agent, the resulting metal material was suspended in a blow dryer having an electric furnace adjusted to 160°C and heat-dried for 10 minutes to form a hydrophilic film on the test material in an amount of 2.0 g/m$^2$ in terms of dry solid content.

[Example 25]

A water dispersion (cerium (IV) oxide/total amount = 3.0 g/100 g) prepared in the same manner as in Example 18 was used as a hydrophilization treatment agent. After coating a test material by immersing it in the hydrophilization treatment agent, the resulting test material was suspended in a blow dryer having an electric furnace adjusted to 100°C and heat-dried for 10 minutes to form a hydrophilic film on the test material in an amount of 0.5 g/m$^2$ in terms of dry solid content.

[Example 26]

A water dispersion (cerium (IV) oxide/total amount = 3.0 g/100 g) prepared in the same manner as in Example 18 was used as a hydrophilization treatment agent. After coating a test material by immersing it in the hydrophilization treatment agent, the resulting test material was suspended in a blow dryer having an electric furnace adjusted to 200°C and heat-dried for 10 minutes to form a hydrophilic film on the test material in an amount of 0.5 g/m$^2$ in terms of dry solid content.

[Example 27]

A water dispersion (cerium (IV) oxide/total amount = 3.0 g/100 g) prepared in the same manner as in Example 18 was used as a hydrophilization treatment agent. After coating a test material by immersing it in the hydrophilization treatment agent, the resulting test material was suspended in a blow dryer having an electric furnace adjusted to 250°C and heat-dried for 10 minutes to form a hydrophilic film on the test material in an amount of 0.5 g/m$^2$ in terms of dry solid content.

[Example 28]

A water dispersion (cerium (IV) oxide/total amount = 3.0 g/100 g) prepared in the same manner as in Example 18 was used as a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 29]

To 5 g of a water dispersion (cerium (IV) oxide/total amount = 3.0 g/100 g) prepared in the same manner as in Example 18, 95 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 30]

To 20 g of a water dispersion (cerium (IV) oxide/total amount = 3.0 g/100 g) prepared in the same manner as in Example 18, 80 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 31]

To 30 g of a water dispersion (cerium (IV) oxide/total amount = 3.0 g/100 g) prepared in the same manner as in Example 18, 70 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 $g/m^2$ in terms of dry solid content.

[Example 32]

To 90 g of a water dispersion (cerium (IV) oxide/total amount = 3.0 g/100 g) prepared in the same manner as in Example 18, 10 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 $g/m^2$ in terms of dry solid content.

[Example 33]

To 30 g of a water dispersion (cerium (IV) oxide/total amount = 3.0 g/100 g) prepared in the same manner as in Example 14, 70 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow  dryer having an electric furnace adjusted to 160°C and heat-dried for 10 minutes to form a hydrophilic film on the test material in an amount of 0.5 $g/m^2$ in terms of dry solid content.

[Example 34]

To 30 g of a water dispersion (cerium (IV) oxide/total amount = 3.0 g/100 g) prepared in the same manner as in Example 15, 70 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 $g/m^2$ in terms of dry solid content.

[Example 35]

To 30 g of a water dispersion (cerium (IV) oxide/total amount = 3.0 g/100 g) prepared in the same manner as in Example 19, 70 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 $g/m^2$ in terms of dry solid content.

[Example 36]

After coating a test material by immersing it in a hydrophilization treatment agent which was prepared in the same manner as in Example 31, the resulting test material was suspended in a blow dryer having an electric furnace adjusted to 100°C and heat-dried for 10 minutes to form a hydrophilic film on the test material in an amount of 0.5 $g/m^2$ in terms of dry solid content.

[Example 37]

After coating a test material by immersing it in a hydrophilization treatment agent which was prepared in the same manner as in Example 31, the resulting test material was suspended in a blow dryer having an electric furnace adjusted to 200°C and heat-dried for 10 minutes to form a hydrophilic film on the test material in an amount of 0.5 $g/m^2$ in terms of dry solid content.

[Example 38]

To 90 g of a water dispersion (cerium (IV) oxide/total amount = 3.0 g/100 g) prepared in the same manner as in Example 18, 10 g of an aqueous solution prepared by dissolving a polyacrylic acid (JURYMER AC-10L: Toagosei Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 39]

To 30 g of a water dispersion (cerium (IV) oxide/total amount = 3.0 g/100 g) prepared in the same manner as in Example 18, 70 g of an aqueous solution prepared by dissolving a polyacrylic acid (JURYMER AC-10L: Toagosei Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 40]

To 20 g of a water dispersion (cerium (IV) oxide/total amount = 3.0 g/100 g) prepared in the same manner as in Example 18, 80 g of an aqueous solution prepared by dissolving a polyacrylic acid (JURYMER AC-10L: Toagosei Co., Ltd.) in water to a  solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 41]

To 30 g of a water dispersion (cerium (IV) oxide/total amount = 3.0 g/100 g) prepared in the same manner as in Example 18, 35 g of an aqueous solution prepared by dissolving a polyacrylic acid (JURYMER AC-10L: Toagosei Co., Ltd.) in water to a solids concentration of 3.0 g/100 g and 35 g of an aqueous solution prepared by dissolving a polyvinyl alcohol (GOHSENOL NM-11: The Nippon Synthetic Chemical Industry Co., Ltd.) in water to a solids concentration of 3.0 g/100 g were added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 42]

To 90 g of a water dispersion (cerium (IV) oxide/ total amount = 3.0 g/ 100 g) prepared in the same manner as in Example 18, 10 g of an aqueous solution prepared by dissolving 2- phosphonobutane- 1, 2, 4- tricarboxylic acid (CHELEST PH- 430: Chelest Corporation) in water to a solids concentration of 3.0 g/ 100 g was added to obtain a hydrophilization treatment agent. After coating a test material by immersing it in the hydrophilization treatment agent, the resulting test material was suspended in a blow dryer having an electric furnace adjusted to 160°C and heat- dried for 10 minutes to form a hydrophilic film on the test material in an amount of 0.5 g/m$^2$ in terms of dry solid content.

[Example 43]

To 90 g of a water dispersion (cerium (IV) oxide/ total amount = 3.0 g/ 100 g)   prepared in the same manner as in Example 18, 10 g of an aqueous solution prepared by dissolving 1, 2, 3, 4- butanetetracarboxylic acid (RIKACID BT- W: New Japan Chemical Co., Ltd.) in water to a solids concentration of 3.0 g/ 100 g was added to obtain a hydrophilization treatment agent. After coating a test material by immersing it in the hydrophilization treatment agent, the resulting test material was suspended in a blow dryer having an electric furnace adjusted to 160°C and heat- dried for 10 minutes to form a hydrophilic film on the test material in an amount of 0.5 g/m$^2$ in terms of dry solid content.

[Example 44]

To 90 g of a water dispersion (cerium (IV) oxide/total amount = 3.0 g/100 g) prepared in the same manner as in Example 18, 10 g of an aqueous solution prepared by dissolving sodium alkyldiphenyl ether disulfonate (PELEX SS-H: Kao Corporation), which is an anionic surfactant, in water to a solids concentration of 3.0 g/100 g was added, thereby obtaining a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 45]

To 90 g of a water dispersion (cerium (IV) oxide/total amount = 3.0 g/100 g) prepared in the same manner as in Example 18, 10 g of an aqueous solution prepared by dissolving a polyoxyalkylene alkyl ether (NOIGEN ET-116C: Dai-ichi Kogyo Seiyaku Co., Ltd.), which is a non-ionic surfactant, in water to a solids concentration of 3.0 g/100 g was added, thereby obtaining a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 46]

To 90 g of a water dispersion (cerium (IV) oxide/total amount = 3.0 g/100 g) prepared in the same manner as in Example 18, 10 g of an aqueous solution prepared by dissolving a sulfonic acid group-containing polyacrylic acid (ARON-A6021: Toagosei Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 47]

To 90 g of a water dispersion (cerium (IV) oxide/total amount = 3.0 g/100 g) prepared in the same manner as in Example 18, 10 g of an aqueous solution prepared by dissolving a polyacrylamide (SHALLOLAM-253P: Dai-ichi Kogyo Seiyaku Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Example 48]

To 90 g of a water dispersion (cerium (IV) oxide/total amount = 3.0 g/100 g) prepared in the same manner as in Example 18, 10 g of an aqueous solution prepared by dissolving a polyvinylpyrrolidone (PVP K30: ISP Japan Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Comparative Example 1]

To cerium (III) nitrate hexahydrate (high-purity reagent: Kanto Chemical Co., Inc.), water was added such that the value of cerium (III) nitrate/total amount became 3.0 g/100 g, thereby obtaining a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m$^2$ in terms of dry solid content.

[Comparative Example 2]

To cerium (III) chloride (high-purity reagent: Kanto Chemical Co., Inc.), water was added such that the value of cerium (III) chloride/total amount became 3.0 g/100 g, thereby obtaining a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m² in terms of dry solid content.

[Comparative Example 3]

A polyvinyl alcohol (GOHSENOL NM-11: The Nippon Synthetic Chemical Industry Co., Ltd) was dissolved in water to a solids concentration of 3.0 g/100 g to prepare an aqueous solution as a hydrophilization treatment agent. After coating a test material by immersing it in the thus obtained hydrophilization treatment agent, the resulting test material was suspended in a blow dryer having an electric furnace adjusted to 160°C and heat-dried for 10 minutes to form a hydrophilic film on the test material in an amount of 0.5 g/m² in terms of dry solid content.

[Comparative Example 4]

To 30 g of an aqueous solution (cerium (III) nitrate/total amount = 3.0 g/100 g) prepared in the same manner as in Comparative Example 1, 70 g of an aqueous solution prepared by dissolving a polyvinyl alcohol (GOHSENOL NM-11: The Nippon Synthetic Chemical Industry Co., Ltd.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m² in terms of dry solid content.

[Comparative Example 5]

To 95 g of an aqueous solution prepared by dissolving a polyvinyl alcohol (GOHSENOL NM- 11: The Nippon Synthetic Chemical Industry Co., Ltd.) in water to a solids concentration of 3.0 g/ 100 g, 5 g of a water dispersion prepared by dispersing zinc 2- pyridinethiol- 1- oxide (HOKUSIDE ZPT: Hokko Sangyo Co., Ltd.) in water to a solids concentration of 3.0 g/ 100 g was added to obtain a hydrophilization treatment agent. After coating a test material by immersing it in the hydrophilization treatment agent, the resulting test material was suspended in a blow dryer having an electric furnace adjusted to 160°C and heat- dried for 10 minutes to form a hydrophilic film on the test material in an amount of 0.5 g/m² in terms of dry solid content.

[Comparative Example 6]

To 95 g of an aqueous solution prepared by dissolving a polyvinyl alcohol (GOHSENOL NM-11: The Nippon Synthetic Chemical Industry Co., Ltd.) in water to a solids concentration of 3.0 g/100 g, 5 g of a water dispersion prepared by dispersing zinc oxide (NANOBYK-3820: BYK Japan K.K.) in water to a solids concentration of 3.0 g/100 g was added to obtain a hydrophilization treatment agent. After coating a test material by immersing it in the hydrophilization treatment agent, the resulting test material was suspended in a blow dryer having an electric furnace adjusted to 160°C and heat-dried for 10 minutes to form a hydrophilic film on the test material in an amount of 0.5 g/m² in terms of dry solid content.

[Comparative Example 7]

An aqueous solution prepared by dissolving 1.5 g of chitosan (DAICHITOSAN VL: Dainichiseika Color & Chemicals Mfg. Co., Ltd.) and 1.5 g of 1, 2, 3, 4- butanetetracarboxylic acid (RIKACID BT- W: New Japan Chemical Co., Ltd.) in water to a total amount of 100 g was used as a hydrophilization treatment agent. After coating a test material by immersing it in the hydrophilization treatment agent, the resulting test material was suspended in a blow dryer having an electric furnace adjusted to 160°C and heat- dried for 10 minutes to form a hydrophilic film on the test material in an amount of 0.5 g/m² in terms of dry solid content.

[Comparative Example 8]

An aqueous solution, which was prepared by adding 10.0 g of cerium (III) chloride (high-purity reagent: Kanto Chemical Co., Inc.) and 5 g of hydrogen peroxide (35%reagent:Wako Pure Chemical Industries Ltd.) to water to a total amount of 1 L, was used as a conversion treatment solution. The conversion treatment solution was heated to 45°C and a test material was immersed therein for 30 minutes and then rinsed with water. The resulting test material was suspended in a blow dryer having an electric furnace adjusted to 100°C and heat-dried for 10 minutes to form a conversion coating on the test material in an amount of 0.1 g/m² in terms of the coating weight of Ce.

Tables 1 and 2 show the conditions of Examples 1 to 48 and Table 3 shows the conditions of Comparative Examples 1 to 8. It is noted here that "wt%" used in Tables 1 to 3 is synonymous with "% by mass".

[Table 1]

| | Poorly Water-soluble Cerium Compounds (A) | | | Organic Component (B) | Solid Content Ratio in Film | | Method of Treatment | Drying Temperature (°C) | Test Material |
|---|---|---|---|---|---|---|---|---|---|
| | Species of Compound | Coating Weight (g/m$^2$) | Particle Size ($\mu$m) | Species of Compound | (A) (wt%) | (B) (wt%) | | | |
| Example 1 | $Ce_2(CO_3)_3$ | 0.5 | 2.0 | None | 100 | 0 | immersing, subsequently drying | 160 | Al Material |
| Example 2 | $Ce_2(CO_3)_3$ | 0.5 | 1.0 | None | 100 | 0 | immersing, subsequently drying | 160 | |
| Example 3 | $Ce_2(CO_3)_3$ | 0.5 | 0.5 | None | 100 | 0 | immersing, subsequently drying | 160 | |
| Example 4 | $Ce_2(CO_3)_3$ | 0.5 | 0.1 | None | 100 | 0 | immersing, subsequently drying | 160 | |
| Example 5 | $CeF_3$ | 0.5 | 2.0 | None | 100 | 0 | immersing, subsequently drying | 160 | |
| Example 6 | $CeF_3$ | 0.5 | 1.0 | None | 100 | 0 | immersing, subsequently drying | 160 | |
| Example 7 | $CeF_3$ | 0.5 | 0.5 | None | 100 | 0 | immersing, subsequently drying | 160 | |
| Example 8 | $CeF_3$ | 0.5 | 0.1 | None | 100 | 0 | immersing, subsequently drying | 160 | |
| Example 9 | $CeF_4$ | 0.5 | 2.0 | None | 100 | 0 | immersing, subsequently drying | 160 | |

(continued)

| | Poorly Water-soluble Cerium Compounds (A) | | | Organic Component (B) | Solid Content Ratio in Film | | Method of Treatment | Drying Temperature (°C) | Test Material |
|---|---|---|---|---|---|---|---|---|---|
| | Species of Compound | Coating Weight (g/m²) | Particle Size (μm) | Species of Compound | (A) (wt%) | (B) (wt%) | | | |
| Example 10 | $CeF_4$ | 0.5 | 1.0 | None | 100 | 0 | immersing, subsequently drying | 160 | |
| Example 11 | $CeF_4$ | 0.5 | 0.5 | None | 100 | 0 | immersing, subsequently drying | 160 | |
| Example 12 | $CeF_4$ | 0.5 | 0.1 | None | 100 | 0 | immersing, subsequently drying | 160 | |
| Example 13 | $CeO_2$ | 0.5 | 2.5 | None | 100 | 0 | immersing, subsequently drying | 160 | |
| Example 14 | $CeO_2$ | 0.5 | 2.0 | None | 100 | 0 | immersing, subsequently drying | 160 | |
| Example 15 | $CeO_2$ | 0.5 | 1.0 | None | 100 | 0 | immersing, subsequently drying | 160 | |
| Example 16 | $CeO_2$ | 0.5 | 0.5 | None | 100 | 0 | immersing, subsequently drying | 160 | |
| Example 17 | $CeO_2$ | 0.5 | 0.1 | None | 100 | 0 | immersing, subsequently drying | 160 | |
| Example 18 | $CeO_2$ | 0.5 | 0.02 | None | 100 | 0 | immersing, subsequently drying | 160 | |

(continued)

| | Poorly Water-soluble Cerium Compounds (A) | | | Organic Component (B) | Solid Content Ratio in Film | | Method of Treatment | Drying Temperature (°C) | Test Material |
|---|---|---|---|---|---|---|---|---|---|
| | Species of Compound | Coating Weight (g/m$^2$) | Particle Size ($\mu$m) | Species of Compound | (A) (wt%) | (B) (wt%) | | | |
| Example 19 | $CeO_2$ | 0.5 | 0.01 | None | 100 | 0 | immersing, subsequently drying | 160 | |
| Example 20 | $CeO_2/CeF_3$ | 0.5 | 0.1/0.1 | None | 50/50 | 0 | immersing, subsequently drying | 160 | |
| Example 21 | $CeO_2$ | 0.1 | 0.02 | None | 100 | 0 | immersing, subsequently drying | 160 | |
| Example 22 | $CeO_2$ | 0.3 | 0.02 | None | 100 | 0 | immersing, subsequently drying | 160 | |
| Example 23 | $CeO_2$ | 1.0 | 0.02 | None | 100 | 0 | immersing, subsequently drying | 160 | |
| Example 24 | $CeO_2$ | 2.0 | 0.02 | None | 100 | 0 | immersing, subsequently drying | 160 | |

[Table 2]

| | Poorly Water-soluble Cerium Compounds (A) | | | Organic Component (B) | Solid Content Ratio in Film | | Method of Treatment | Drying Temperature (°C) | Test Material |
|---|---|---|---|---|---|---|---|---|---|
| | Species of Compound | Coating Weight (g/ m²) | Particle Size ($\mu$m) | Species of Compound | (A) (wt%) | (B) (wt%) | | | |
| Example 25 | $CeO_2$ | 0.5 | 0.02 | None | 100 | 0 | immersing, subsequently drying | 100 | Al Material |
| Example 26 | $CeO_2$ | 0.5 | 0.02 | None | 100 | 0 | immersing, subsequently drying | 200 | |
| Example 27 | $CeO_2$ | 0.5 | 0.02 | None | 100 | 0 | immersing, subsequently drying | 250 | |
| Example 28 | $CeO_2$ | 0.5 | 0.02 | None | 100 | 0 | immersing, subsequently drying | 160 | Cu Material |
| Example 29 | $CeO_2$ | 0.5 | 0.02 | PVA | 5 | 95 | immersing, subsequently drying | 160 | Al Material |
| Example 30 | $CeO_2$ | 0.5 | 0.02 | PVA | 20 | 80 | immersing, subsequently drying | 160 | |
| Example 31 | $CeO_2$ | 0.5 | 0.02 | PVA | 30 | 70 | immersing, subsequently drying | 160 | |
| Example 32 | $CeO_2$ | 0.5 | 0.02 | PVA | 90 | 10 | immersing, subsequently drying | 160 | |
| Example 33 | $CeO_2$ | 0.5 | 2.0 | PVA | 30 | 70 | immersing, subsequently drying | 160 | |

(continued)

| | Poorly Water-soluble Cerium Compounds (A) | | | Organic Component (B) | Solid Content Ratio in Film | | Method of Treatment | Drying Temperature (°C) | Test Material |
| | Species of Compound | Coating Weight (g/m²) | Particle Size (μm) | Species of Compound | (A) (wt%) | (B) (wt%) | | | |
|---|---|---|---|---|---|---|---|---|---|
| Example 34 | $CeO_2$ | 0.5 | 1.0 | PVA | 30 | 70 | immersing, subsequently drying | 160 | |
| Example 35 | $CeO_2$ | 0.5 | 0.01 | PVA | 30 | 70 | immersing, subsequently drying | 160 | |
| Example 36 | $CeO_2$ | 0.5 | 0.02 | PVA | 30 | 70 | immersing, subsequently drying | 100 | |
| Example 37 | $CeO_2$ | 0.5 | 0.02 | PVA | 30 | 70 | immersing, subsequently drying | 200 | |
| Example 38 | $CeO_2$ | 0.5 | 0.02 | PAc | 90 | 10 | immersing, subsequently drying | 160 | |
| Example 39 | $CeO_2$ | 0.5 | 0.02 | PAc | 30 | 70 | immersing, subsequently drying | 160 | |
| Example 40 | $CeO_2$ | 0.5 | 0.02 | PAc | 20 | 80 | immersing, subsequently drying | 160 | |
| Example 41 | $CeO_2$ | 0.5 | 0.02 | PAc/PVA | 30 | 35/35 | immersing, subsequently drying | 160 | |
| Example 42 | $CeO_2$ | 0.5 | 0.02 | PBTC | 90 | 10 | immersing, subsequently drying | 160 | |

(continued)

| | Poorly Water-soluble Cerium Compounds (A) | | Organic Component (B) | Solid Content Ratio in Film | | Method of Treatment | Drying Temperature (°C) | Test Material |
| | Species of Compound | Coating Weight (g/m²) | Particle Size (μm) | Species of Compound | (A) (wt%) | (B) (wt%) | | | |
|---|---|---|---|---|---|---|---|---|---|
| Example 43 | $CeO_2$ | 0.5 | 0.02 | BTC | 90 | 10 | immersing, subsequently drying | 160 | |
| Example 44 | $CeO_2$ | 0.5 | 0.02 | anionic surfactant | 90 | 10 | immersing, subsequently drying | 160 | |
| Example 45 | $CeO_2$ | 0.5 | 0.02 | non-ionic surfactant | 90 | 10 | immersing, subsequently drying | 160 | |
| Example 46 | $CeO_2$ | 0.5 | 0.02 | PAc (sulfonic acid group containing) | 90 | 10 | immersing, subsequently drying | 160 | |
| Example 47 | $CeO_2$ | 0.5 | 0.02 | PAAM | 90 | 10 | immersing, subsequently drying | 160 | |
| Example 48 | $CeO_2$ | 0.5 | 0.02 | PVP | 90 | 10 | immersing, subsequently drying | 160 | |

[Table 3]

| | Poorly Water-soluble Cerium Compounds (A) | | | Organic Component(B) | Solid Content Ratio in Film | | Method of Treatment | Drying Temperature (°C) | Test Material |
|---|---|---|---|---|---|---|---|---|---|
| | Species of Compound | Coating Weight (g/ m$^2$) | Particle Size ($\mu$ m) | Species of Compound | (A) (wt%) | (B) (wt%) | | | |
| Comparative Example 1 | Ce(NO$_3$)$_3$ | 0.5 | - | None | 100 | 0 | immersing, subsequently drying | 160 | Al Material |
| Comparative Example 2 | CeCl$_3$ | 0.5 | - | None | 100 | 0 | immersing, subsequently drying | 160 | |
| Comparative Example 3 | None | 0.5 | - | PVA | 0 | 100 | immersing, subsequently drying | 160 | |
| Comparative Example 4 | Ce(NO$_3$)$_3$ | 0.5 | - | PVA | 30 | 70 | immersing, subsequently drying | 160 | |
| Comparative Example 5 | ZPT | 0.5 | 0.30 | PVA | 5 | 95 | immersing, subsequently drying | 160 | |
| Comparative Example 6 | ZnO | 0.5 | 0.20 | PVA | 5 | 95 | immersing, subsequently drying | 160 | |
| Comparative Example 7 | Chitosan | 0.5 | - | BTC | 50 | 50 | immersing, subsequently drying | 160 | |
| Comparative Example 8 | Conversion Treatment | Ce:0.1 | | None | - | - | immersing, subsequently rinsing and blow drying | 100 | |

<Test material>

The test material used in Examples 1 to 27 and 29 to 48 Comparative Examples 1 to 8 was a commercially available aluminum alloy material of 0.8 mm in thickness, 70 mm in width and 150 mm in length which corresponds to JIS A1000. The test material used in Example 28 was a commercilly available copper alloy. material of 0.8 mm in thickness, 70 mm in width and 150 mm in length which corresponds to JIS C1000.

<Cleaning Method of Test Material>

When forming the above-described films of Examples and Comparative Examples, the above-described test materials were each immersed for 2 minutes in a treatment bath which contained an alkaline degreasing agent ("FINE CLEANER 315", manufactured by Nihon Parkerizing Co., Ltd.) at a concentration of 20 g/L and was adjusted to have a bath temperature of 60°C, thereby the dust and oil adhered on the surface were removed. Then, the alkali content remaining on the surface was washed with tap water for the respective test materials to be used.

Using, as evaluation materials, the test materials having a film formed thereon which were obtained in Examples and Comparative Examples, the film efficiencies were evaluated by the following evaluation methods.

<Evaluation of Condensation Wettability>

After immersing each evaluation material in deionized water for 480 hours, the resulting evaluation material was heat-dried for 1 hour in a blow dryer adjusted to 50°C and then cooled to room temperature. From the thus cooled evaluation material, a test piece of 40 mm × 40 mm in size was cut out and used for evaluation. The test piece was cooled to 5°C for 5 minutes and thereafter, in an atmosphere adjusted to have a temperature of 25°C and a humidity of 60% RH, the condition of condensation water on the surface of the test piece was visually observed to evaluate the condensation wettability based on the rating number shown in Table 4.

<Criteria for Evaluation of Condensation Wettability>

[Table 4]

| Evaluation | Reference Appearance | Condition |
|---|---|---|
| 5 | | The entire surface is uniformly wet. |
| 4 | | Dew condensation water which grew up greatly and is not granular is present in a part. |
| 3 | | Dew condensation water grew up to some extent and is present in non-granulated condition. |

(continued)

| Evaluation | Reference Appearance | Condition |
|---|---|---|
| 2 | | Dew condensation water grew up remaining granular and is present. |
| 1 | | Dew condensation water is present in small granulations. |

<Evaluation of Mold Resistance>

After immersing each evaluation material in deionized water for 480 hours, the resulting evaluation material was heat- dried for 1 hour in a blow dryer adjusted to 50°C and then cooled to room temperature. From the thus cooled evaluation material, a test piece of 40 mm × 40 mm in size was cut out and used for evaluation. As test fungi, a mixed spore suspension of 4 fungal species listed below was sprayed onto the test piece and cultured at 27°C for 7 days in a covered container. Thereafter, the condition of mold growth was measured in terms of the area occupied by mold with respect to the area of the test piece, thereby evaluating the mold resistance based on the below- described rating number (in accordance with JIS- Z- 2911- 2000) .

[Test Fungi]

- *Aspergillus niger* (IFO6341)
- *Penicillium funiclosum* (IFO6345)
- *Cladosporium cladosporioides* (IFO6348)
- *Aureobasidium pullulans* (IFO6353)

<Criteria for Evaluation of Mold Resistance>

5: The area occupied by mold was less than 1%.
4: The area occupied by mold was 1% or larger but less than 10%.
3: The area occupied by mold was 10% or larger but less than 30%.
2: The area occupied by mold was 30% or larger but less than 60%.
1: The area occupied by mold was 60% or larger.

<Water Contact Angle>

After immersing each evaluation material in deionized water for 480 hours, the resulting evaluation material was heat-dried for 1 hour in a blow dryer adjusted to 50°C and then cooled to room temperature to be used for evaluation. On the evaluation material, 2 μl of deionized water was dropped and the contact angle of the thus formed water droplet was measured using a contact angle meter (trade name: Model CA-X, manufactured by Kyowa Interface Science Co, Ltd.) to evaluate the water contact angle based on the following rating number.

<Criteria for Evaluation of Water Contact Angle>

5: The contact angle was smaller than 10°.
4: The contact angle was 10° or lager but smaller than 20°.
3: The contact angle was 20° or lager but smaller than 30°.
2: The contact angle was 30° or lager but smaller than 40°.
1: The contact angle was 40° or lager.

<Test for Evaluating Water Resistance of Hydrophilic Film>

The mass of each evaluation material was measured before and after immersing it in deionized water for 480 hours. The film residual ratio was determined using the following equation to evaluate the water resistance based on the below-described rating number.
$$\text{Film residual ratio} = (C - A)/(B - A) \times 100\ (\%)$$

A: Mass of test material before film formation (g)
B: Mass of evaluation material after film formation (g)
C: Mass of dried evaluation material after the 480-hour immersion in deionized water (g)

It is noted here that the term "dried evaluation material" refers to an evaluation material which was heat-dried for 1 hour in a blow dryer adjusted to 50°C and then cooled to room temperature.

<Criteria for Evaluation of Water Resistance>

5: The film residual ratio was 90% or higher.
4: The film residual ratio was 70% or higher but lower than 90%.
3: The film residual ratio was 60% or higher but lower than 70%.
2: The film residual ratio was higher than 0% but lower than 60%.
1: The film residual ratio was 0%.

<Test for Evaluating Water Resistance of Poorly Water-soluble Cerium Compound>

Using a fluorescent X-ray analyzer (trade name: ZSX-100, manufactured by Rigaku Corporation), the coating weight of Ce of each evaluation material was measured before and after immersing it in deionized water for 480 hours. The Ce residual ratio was determined using the following equation to evaluate the water resistance based on the below-described rating number. It is noted here that, for Comparative Examples 5 and 6, the Zn residual ratio was determined in the same manner to evaluate the water resistance. As for Comparative Examples 3 and 7, this evaluation test was not performed.
$$\text{Ce residual ratio} = (B)/(A) \times 100\ (\%)$$

A: Coating weight of Ce before the immersion in deionized water (mg/m$^2$)
B: Coating weight of Ce after the 480-hour immersion in deionized water (mg/m$^2$)

<Criteria for Evaluation of Ce Residual Property>

5: The Ce residual ratio was 90% or higher.
4: The Cc residual ratio was 80% or higher but lower than 90%.
3: The Ce residual ratio was 60% or higher but lower than 80%.
2: The Cc residual ratio was higher than 0% but lower than 60%.
1: The Ce residual ratio was 0%.

In the above-described evaluations of the film performances, a rating number of 3 or higher was regarded as satisfactory. The evaluation results are shown in Tables 5 and 6.

[Table 5]

|  | Wettability for Dew Condensation (after immersion) | Mold Resistance | Water Contact Angle (after immersion) | Water Resistance | |
|---|---|---|---|---|---|
|  |  |  |  | Film Residual Property | Ce Residual Property |
| Example 1 | 3 | 4 | 4 | 3 | 3 |
| Example 2 | 3 | 4 | 4 | 3 | 3 |
| Example 3 | 3 | 4 | 4 | 3 | 3 |
| Example 4 | 3 | 4 | 4 | 3 | 3 |
| Example 5 | 3 | 4 | 4 | 3 | 3 |
| Example 6 | 3 | 4 | 4 | 3 | 3 |
| Example 7 | 3 | 4 | 4 | 3 | 3 |
| Example 8 | 3 | 4 | 4 | 3 | 3 |
| Example 9 | 3 | 4 | 4 | 3 | 3 |
| Example 10 | 3 | 4 | 4 | 3 | 3 |
| Example 11 | 3 | 4 | 4 | 3 | 3 |
| Example 12 | 3 | 4 | 4 | 3 | 3 |
| Example 13 | 3 | 4 | 4 | 3 | 3 |
| Example 14 | 4 | 5 | 4 | 4 | 4 |
| Example 15 | 5 | 5 | 4 | 4 | 4 |
| Example 16 | 5 | 5 | 4 | 4 | 4 |
| Example 17 | 5 | 5 | 4 | 4 | 4 |
| Example 18 | 5 | 5 | 4 | 4 | 4 |
| Example 19 | 5 | 5 | 4 | 4 | 4 |
| Example 20 | 4 | 5 | 4 | 4 | 4 |
| Example 21 | 4 | 4 | 4 | 4 | 4 |
| Example 22 | 5 | 5 | 5 | 4 | 4 |
| Example 23 | 5 | 5 | 5 | 4 | 4 |
| Example 24 | 4 | 5 | 5 | 4 | 4 |

[Table 6]

| | Wettability for Dew Condensation (after immersion) | Mold Resistance | Water Contact Angle (after immersion) | Water Resistance | |
|---|---|---|---|---|---|
| | | | | Film Residual Property | Ce Residual Property |
| Example 25 | 5 | 5 | 5 | 4 | 4 |
| Example 26 | 5 | 5 | 5 | 4 | 4 |
| Example 27 | 4 | 5 | 4 | 5 | 5 |
| Example 28 | 5 | 5 | 5 | 4 | 4 |
| Example 29 | 4 | 4 | 3 | 5 | 5 |
| Example 30 | 4 | 5 | 3 | 5 | 5 |
| Example 31 | 5 | 5 | 4 | 5 | 5 |
| Example 32 | 5 | 5 | 5 | 5 | 5 |
| Example 33 | 5 | 5 | 4 | 4 | 4 |
| Example 34 | 5 | 5 | 4 | 5 | 5 |
| Example 35 | 5 | 5 | 4 | 5 | 5 |
| Example 36 | 4 | 5 | 4 | 4 | 4 |
| Example 37 | 4 | 5 | 4 | 5 | 5 |
| Example 38 | 5 | 5 | 5 | 4 | 4 |
| Example 39 | 4 | 5 | 5 | 4 | 4 |
| Example 40 | 4 | 5 | 4 | 3 | 3 |
| Example 41 | 5 | 5 | 4 | 5 | 5 |
| Example 42 | 4 | 5 | 4 | 4 | 4 |
| Example 43 | 4 | 5 | 4 | 4 | 4 |
| Example 44 | 4 | 5 | 5 | 4 | 4 |
| Example 45 | 4 | 5 | 5 | 4 | 4 |
| Example 46 | 4 | 5 | 5 | 4 | 4 |
| Example 47 | 4 | 5 | 5 | 4 | 4 |
| Example 48 | 4 | 5 | 4 | 4 | 4 |
| Comparative Example 1 | Not Complied with | Not Complied with | Not Complied with | 1 | 1 |
| Comparative Example 2 | Not Complied with | Not Complied with | Not Complied with | 1 | 1 |
| Comparative Example 3 | 2 | 1 | 2 | 5 | - |
| Comparative Example 4 | 2 | 1 | 2 | 4 | 2 |
| Comparative Example 5 | 1 | 2 | 2 | 5 | 2(Zn Residual Property) |
| Comparative Example 6 | 2 | 1 | 2 | 5 | 1(Zn Residual Property) |

(continued)

| | Wettability for Dew Condensation (after immersion) | Mold Resistance | Water Contact Angle (after immersion) | Water Resistance | |
| --- | --- | --- | --- | --- | --- |
| | | | | Film Residual Property | Ce Residual Property |
| Comparative Example 7 | 1 | 1 | 1 | 5 | - |
| Comparative Example 8 | 1 | 2 | 1 | - | 5 |

As clearly seen from the results shown in Tables 5 and 6, the hydrophilic films of Examples 1 to 48 all had excellent condensation wettability and mold resistance.

Meanwhile, the films of Comparative Examples 1 and 2, which were obtained from a hydrophilization treatment agent prepared by dissolving a water- soluble cerium compound in water, did not have water resistance. From this, it is understood that it is important to use a poorly water- soluble cerium compound. The film of Comparative Example 3 was formed by a polyvinyl alcohol alone and its water contact angle was at a level where the film is normally considered to be hydrophilic; however, it is seen that the film of Comparative Example 3 could not attain condensation wettability and mold resistance, which are objects of the present invention. Comparative Example 4 represents a case where a water-soluble cerium compound was used in combination with an organic component. As compared to Comparative Examples 1 and 2, the film of Comparative Example 4 had an improved water resistance (film residual property) and Ce residual property; however, it is seen that the film could not attain condensation wettability and mold resistance. Comparative Examples 5 and 6 represent those cases where ZPT and ZnO, which are generally known to have mold resistance, were used in combination with PVA. It is seen that both of these films could not attain condensation wettability and that the films both had a low Zn residual property and thus could not attain mold resistance. Comparative Example 7 represents a case where chitosan, which is generally known to have antimicrobial properties, was used. This film could not attain condensation wettability and did not exhibit mold resistance despite of its good water resistance. In other words, it is seen that chitosan does not have mold resistance. Comparative Example 8 is a case where a conversion coating was obtained by subjecting a Ce compound to a conversion treatment. This film had high Ce residual property; however, it is seen that condensation wettability and mold resistance, which are objects of the present invention, could not be attained.

<Contact Angle and Condensation Wettability>

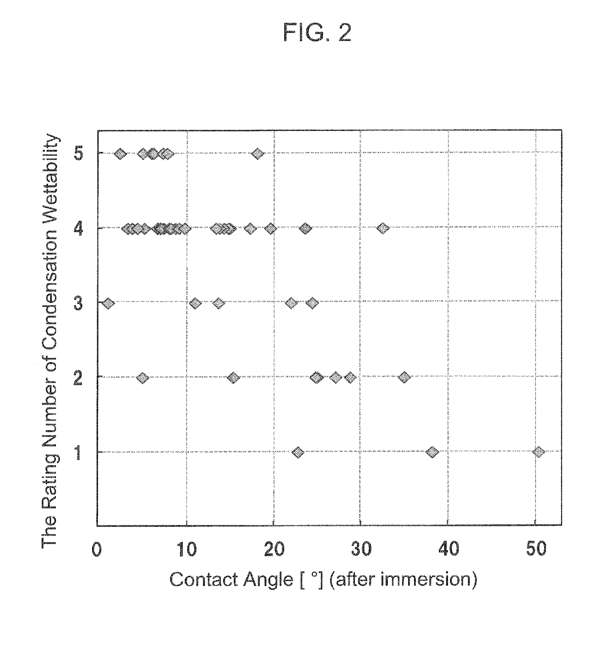

Next, contact angle and condensation wettability are explained. Fig. 2 is a graph which shows the relationship between the results of measuring the "contact angle (after immersion in deionized water) ", which is a common method of evaluating the hydrophilicity, and the results of measuring the "condensation wettability" which was performed as an evaluation method in Examples. The plots of Fig. 2 indicate the correlation between the contact angle of the respective films of Examples 1 to 48 and Comparative Examples 3 to 8 (abscissa, raw data) and the condensation wettability (ordinate, rating numbers) .

As shown in Fig. 2, there was observed a general trend that the condensation wettability was improved as the contact angle became smaller; however, the condensation wettability was found to be variable even in the contact angle range of smaller than 40° where a film is generally considered to have hydrophilicity. That is, while there were cases where the condensation wettability was not sufficient even at a small contact angle of smaller than 10°, there were also cases where the condensation wettability was satisfactory at a contact angle of about 30° to 40°. This suggests that, even on a film which is defined to be hydrophilic based on the contact angle, as indicated by the rating numbers "2" and "1" shown in Table 4, condensation water may grow into the form of particles to cause clogging between fins.

In view of the above, as a method of evaluating a film which inhibits clogging of fins caused by condensation water, an evaluation of the contact angle alone is not sufficient and it is desired that the film be judged along with the results of the evaluation of the condensation wettability established by the present inventor. In particular, such an evaluation method used in Examples that focuses on the wetting and spreading of condensation water in the early stage of dew condensation (condensation state of the surface after a 5-minute cooling) can be viewed as an evaluation method which conforms to the actual conditions and a hydrophilic film which satisfies the evaluation criteria of such evaluation method can solve the problems of the present invention.

**Description of the Reference Numerals**

1 Metal material (Material to be coated)

2, 2' Corrosion-resistant film (Corrosion-resistant film is not required.)
3, 3' Hydrophilic film
10 Metal material which formed hydrophilic film.

**Claims**

1. A hydrophilization treatment agent, comprising:

   water; and
   one or more compounds selected from poorly water-soluble cerium compounds (A) dispersed in the water.

2. The hydrophilization treatment agent according to claim 1, wherein the poorly water-soluble cerium compound (A) has a particle size of 0.01 to 2.0 $\mu$m and is dispersed in the water.

3. The hydrophilization treatment agent according to claim 1 or 2, wherein the poorly water-soluble cerium compound (A) is one or more compounds selected from cerium (III) carbonate, cerium (III) fluoride, cerium (IV) fluoride and cerium (IV) oxide.

4. The hydrophilization treatment agent according to any one of claims 1 to 3, further comprises one or more components selected from organic components (B) in the water.

5. A hydrophilic film formed on a surface of a metal material, comprising one or more compounds selected from poorly water-soluble cerium compounds (A).

6. The hydrophilic film according to claim 5, wherein the content of the poorly water-soluble cerium compound (A) is 5% to 100% by mass in terms of solid content ratio.

7. The hydrophilic film according to claim 5 or 6, wherein the poorly water-soluble cerium compound (A) is one or more compounds selected from cerium (III) carbonate, cerium (III) fluoride, cerium (IV) fluoride and cerium (IV) oxide.

8. The hydrophilic film according to any one of claims 5 to 7, wherein the hydrophilic film further comprises one or more components selected from organic components (B).

9. The hydrophilic film according to any one of claims 5 to 8, wherein the hydrophilic film is obtained by treating the surface of the metal material with the hydrophilization treatment agent according to any one of claims 1 to 4 and subsequently drying the resultant.

10. A hydrophilization treatment method, comprising:

    a step of treating a part or the entirety of a surface of a metal material with the hydrophilization treatment agent according to any one of claims 1 to 4; and
    a step of drying the resultant to form the hydrophilic film according to any one of claims 5 to 9, subsequently.

11. A metal material, comprising the hydrophilic film according to any one of claims 5 to 9 on a surface.

12. The metal material according to claim 11, wherein the metal material is any one of an aluminum material, an aluminum alloy material, a copper material and a copper alloy material.

13. The metal material according to claim 11 or 12, wherein the metal material is a member of a heat exchanger.

FIG. 1

10

FIG. 2

## INTERNATIONAL SEARCH REPORT

International application No.

PCT/JP2011/073889

### A. CLASSIFICATION OF SUBJECT MATTER
*C09D201/00*(2006.01)i, *C09D1/00*(2006.01)i, *C09D5/02*(2006.01)i, *C09D7/12*
(2006.01)i, *C09K3/18*(2006.01)i, *F28F13/18*(2006.01)i

According to International Patent Classification (IPC) or to both national classification and IPC

### B. FIELDS SEARCHED

Minimum documentation searched (classification system followed by classification symbols)
C09D201/00, C09D1/00, C09D5/02, C09D7/12, C09K3/18, F28F13/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2001-089752 A (Toto Ltd.),<br>03 April 2001 (03.04.2001),<br>claim 1; paragraphs [0012], [0016]; example 17<br>(Family: none) | 1-13 |
| X<br>A | JP 2009-506186 A (Lapeyre),<br>12 February 2009 (12.02.2009),<br>claim 1; paragraph [0080]; examples<br>& US 2008/0311415 A1   & EP 1926577 A1<br>& WO 2007/026074 A1 | 5-9<br>1-4,10-13 |
| A | JP 2005-054116 A (Nihon University),<br>03 March 2005 (03.03.2005),<br>entire text<br>(Family: none) | 1-13 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>　25 January, 2012 (25.01.12) | Date of mailing of the international search report<br>　07 February, 2012 (07.02.12) |
|---|---|
| Name and mailing address of the ISA/<br>　Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/073889 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-313422 A (Matsushita Electric Works, Ltd.), 06 December 2007 (06.12.2007), entire text (Family: none) | 1-13 |
| A | JP 2000-248381 A (Nippon Light Metal Co., Ltd.), 12 September 2000 (12.09.2000), entire text & US 6338876 B1 | 1-13 |
| A | JP 61-145263 A (Nippon Foil Mfg. Co., Ltd.), 02 July 1986 (02.07.1986), entire text (Family: none) | 1-13 |
| A | JP 05-222334 A (Nippon Paint Co., Ltd.), 31 August 1993 (31.08.1993), entire text (Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H51993302042 B
- JP 2000171191 A
- JP 2006078134 A
- JP 2002105241 A
- JP H51993222334 B

**Non-patent literature cited in the description**

- The Society for Antibacterial and Antifungal Agent. *Antibacterial and Antifungal Agents,* 1993, vol. 21 (7), 385-389
- The Society for Antibacterial and Antifungal Agent. *Antibacterial and Antifungal Agents,* 1994, vol. 22 (5), 277-282
- *Antibacterial and Antifungal Agents,* 2008, vol. 36 (6), 359-363